# EUROPEAN PATENT SPECIFICATION

(11) **EP 2 986 790 B1**
(45) Date of publication and mention of the grant of the patent: **11.10.2017**
(21) Application number: 14728307.1
(22) Date of filing: 16.04.2014
(51) Int. Cl.: E04D 1/08, E04D 3/32, A01G 9/14, E04D 3/28

(54) **ROOFING PANEL WITH ANTI-DRIP FUNCTION**
DACHPLATTE MIT TROPFFESTIGKEITSFUNKTION
PANNEAU DE TOITURE PRÉSENTANT UNE FONCTION ANTI-ÉGOUTTEMENT

(30) Priority: 16.04.2013 IT MI20130620
(43) Date of publication of application: 24.02.2016
(73) Proprietor: GIPLAST srl, 21050 Lonate Ceppino VA (IT)
(72) Inventor: GHIDI, Enrico, I-21050 Lonate Ceppino (VA) (IT)
(74) Representative: Gislon, Gabriele
(86) International application number: PCT/IB2014/060769
(87) International publication number: WO 2014/170844

(56) References cited:
- EP-A- 0 275 683
- WO-A-2004/106662
- DE-C1- 19 606 442
- FR-A- 355 297
- US-A- 2 093 559

## Description

### FIELD OF THE INVENTION

The present invention relates to panels for building and, in particular, panels for the construction of roofing arrangements for structures, which is able to prevent the undesired drip phenomenon inside the structures caused by the water accumulated in form of condensate (condensation) on the panel surface inside the structure. Further, the invention relates to a roofing arrangement formed by one or more panels according to the invention.

### KNOWN PREVIOUS ART

In the building field, in particular in factory building, one way of construction of roofing arrangements provides that panels, made of light and inexpensive materials such as thermoplastic materials, are used. Generally, panels made of honeycomb or solid polycarbonate, methacrylate, PVC, etc., are used.

The use of panels of thermoplastic material in the building field is particularly common for roofing arrangements for several types of structures, in their turn constructed in a known manner by using different possible materials, for example structures made of metal, wood, masonry, and the like.

In general the use of metal supporting structures, to be associated with roofing arrangements formed by modular panels made of thermoplastic materials connected to each other, has considerably grown, these materials having typical characteristics of lightness together with a high resistance against atmospheric agents.

The panel according to the present invention can be used to form roofing arrangements for different types of structures, such as warehouses, industrial sheds, large working areas, even though its main application is for constructing roofing arrangements for structures susceptible to the formation of condensate on the surfaces thereof and, in particular, on the inner surfaces of the panels composing the roofing arrangement, primarily due to temperature and humidity conditions inside it.

In particular, the panel according to the present invention is specially used in roofing arrangements for structures designed for plant cultivation and/or plant protection, such as, for example, the greenhouses.

In fact, these structures are maintained in special and controlled temperature and humidity conditions such that the plants cultivated or protected therein can survive and grow up. Precisely due to internal temperature and humidity conditions, these structures and in particular the panels making up their roofing arrangements, are susceptible to accumulate condensate (condensation) at their own surfaces inside the structure itself.

The condensate forms if the water vapour in the atmosphere turns into water when it contacts a surface having a temperature below the "dew point" with respect to the surrounding environment.

This phenomenon can cause severe drawbacks in structures designed for plant cultivation and/or plant protection, such as, in particular, greenhouses or horticulture surfaces.

In fact, the water drops accumulated on the inner surfaces of the structure of the panels making up the roofing arrangement, reduce or at least modify the passage of light radiation. Further, the water accumulated on the panels can damage what is under the roofing arrangement and, in particular, the underneath plants, due to the water drops that fall by gravity, resulting in the undesired drip phenomenon.

To face these drawbacks, currently used panels for constructing the roofing arrangements of the greenhouses, or similar structures, are surface-treated by applying a varnish thereon, or a similar liquid, forming a film or a thin surface layer able to reduce the formation of condensate and reduce the accumulation of water drops.

In particular, the products applied on the surface of the panel and, in particular, the used varnishes and films, are intended to reduce the contact angle of the panel such as to reduce the formation of water drops.

In some cases, the surface of the panel arranged inside the structure is surface-treated by applying a thin layer on the surface which prevents the formation of drops while assisting the condensed water to slide, thus reducing the drip phenomenon inside the structure, and particularly on plants.

Despite this, it should be noted that the currently used panels for roofing arrangements are not free from drawbacks.

In fact, the surface treatment of the panels, providing the application of special varnishes, or a film, or additional thin surface layers, remarkably complicates the manufacturing process of the panel itself, such that it inevitably becomes more complicated as well as more expensive to perform.

In fact, the protraction of the manufacturing process and the increase of the manufacturing costs, inevitably cause the increase of the final price of the panel.

Moreover, the surface treatment currently used and, in particular, the film or thin layer applied to the surface of the panel, can be susceptible over time to external agents which irreversibly degrades it, thereby decreasing its properties of limiting the accumulation of condensate and preventing the drip inside the structure.

The document US2093559 teaches to form glass tiles provided with grooves designed to collect and channel the water accumulated on the tile surface. Despite this, the grooves of the described tiles are formed only at the lower portions of the waves provided on the tile. As a result the problem of the formation of water drops, and the resulting drip, is not effectively solved.

Furthermore, it should be noted that the water accumulated on the glass behaves differently from that on the plastic panels. In particular, the water sliding on the plastic material surface is very decreased and therefore the water accumulation is much greater with respect to the tiles made of glass.

The document DE 196 06 442 C1 discloses a panel for the construction of roofing arrangements according to the preamble of claim 1.

It is an object of the present invention to solve the problems and the drawbacks due to the above discussed panels for roofing arrangements.

Furthermore, it is an object of the present invention to provide a panel for constructing roofing arrangements, preferably made of plastic material, in particular for structures susceptible to the formation of condensate due to temperature and humidity conditions inside them, and in particular structures designed for plant cultivation and/or plant protection, which is easy and inexpensive to manufacture.

Further, it is an object of the present invention to provide a panel for roofing arrangements with anti-drip function, i.e. able to prevent the undesired drip phenomenon inside the structure, without the need of treating its surface by varnishes or other means to form an additional surface layer, as in currently available panel for roofing arrangements.

### SUMMARY OF THE INVENTION

These and other objects are provided by a panel for constructing roofing arrangements, according to the present invention, as defined in the claims, comprising two substantially opposite surfaces defining the panel, said surfaces being spaced apart by a given thickness. The panel further comprises a plurality of elongated recesses formed on at least one of the two opposite surfaces of the panel.

The panel comprises an inner surface, on which the elongated recesses are always arranged, designed to form the inner surface of the roofing arrangement, and an outer surface arranged in use outside the roofing arrangement. Preferably, the recesses are formed only on one of the two opposite surfaces, i.e. on the surface forming the inner surface of the roofing arrangement. The outer surface of the panel can have a different surface finish according to the use, and, for example, can be smooth.

The term "recess" means herein and below a recessed portion on the surface of the panel, formed in the thickness of the panel itself, and preferably not protruding to cause a modification also of the surface of the panel opposite with respect to the surface where the recesses are formed.

Also, the term "elongated" means herein that the recesses extend in the plane in a direction such that one of their dimensions prevails on the other, in particular they extend with a length much greater than the width.

Advantageously, the elongated recesses on the surface of the panel allow to channel therein the drops of condensate water accumulated on the panel, such that they can easily collect and flow inside the elongated recesses.

In this way, the water can be effectively removed from the panel without the formation of droplets which, falling down by gravity, would result in the undesired phenomenon of drip inside the structure.

The panel according to the invention is made of a thermoplastic polymeric material, preferably polycarbonate. Advantageously, the use of elongated recesses on the underside surface of the panel (and generally inside the roofing arrangement) allows to reduce the contact angle of the surface made of thermoplastic material, additionally facilitating the formed water to slide, thereby preventing it from falling down due to drip. Moreover, the elongated recesses also allow to perform an auto-clean of the panel as a consequence of water canalized inside them.

According to an aspect of the present invention, the elongated recesses extend over the entire length of the panel, thereby connecting two opposite sides of the same.

It should be noted that, according to a preferred aspect of the present invention, each elongated recess extends along a straight line. In this regard, it should be noted that further possible embodiments can also be used, in which elongated recesses extend along lines that are not perfectly straight but tilted or curved. However, the recesses must comprise an elongated shape for allowing the water accumulated on the surface of the panel to flow inside them and therefore their draining.

According to a further aspect of the present invention the elongated recesses extend parallel to each other. The elongated recesses cover the entire, or substantially the entire, surface of the panel.

The terms "cover substantially the entire surface of the panel" mean that the recesses cover at least 70%, preferably at least 80% and more preferably at least 90% of the surface of the panel. Furthermore, the elongated recesses are laterally juxtaposed relative to one another and are arranged in succession.

Moreover, each recess comprises at least one surface extending from at least one bottom portion and at least one ridge of the recess. It should be noted that the upper portion, or the top of the ridges of the recesses, preferably lies on the surface of the panel on which the recesses are arranged, so as to identify it.

In particular, according to some possible embodiments of the present invention, the at least one surface of the recess extending from at least one bottom portion and at least one ridge of the recess comprises at least one flat portion, or at least one concave portion, or at least one convex portion.

Due to these shapes of the recess surface, the water, being in form of condensate on the surface of the panel, slides and is canalized with particular effectiveness to the bottom portion of the recesses.

As a consequence, the elongated recesses provide the panel according to the present invention with an effective anti-drip function, in fact, if condensate forms on the surface of the panel provided with the plurality of recesses, then the latter allows the water drops to be channelled and thus slide therein. By doing so, the water accumulated can be removed from the surface of the panel by exploiting the roofing arrangement tilt. By doing so, the water drops due to condensation will not remain on its surface but they will be channelled into the recesses which will allow the draining thereof, thereby preventing the accumulation on the surface of the panel and preventing a drip downwards from the panels of the roofing arrangement.

For these reasons, the panel according to the present invention can be used advantageously for constructing roofing arrangements for structures, in particular where the condensate is very likely to form due to the temperature and humidity conditions inside the structure.

In detail, the panel according to the present invention is specially used in structures designed for plant cultivation and/or plant protection, such as, for example, greenhouses, nurseries, covered gardens, etc.

The panel according to the present invention has the additional advantage that it is particularly easy and cost effective to produce, in fact it is provided with elongated recesses which can be formed directly on the surface of the panel while producing it, in particular while extruding it.

In particular, to produce the present panel, it is not necessary to apply varnishes, or additional films, or additional surface layers, as in panels currently available on the market.

Moreover, the present invention relates to a roofing arrangement for structures formed by means of one or more panels of the above described type, possibly constrained together in a known way. The elongated recesses are formed on a surface that is preferably the surface inside the roofing arrangement, i.e. the surface facing the interior of the roofed area, or structure.

Preferably, the roofing arrangement is at least partially tilted or curved with respect to the ground or, in general, with respect to a substantially horizontal plane, and the panel, or panels, composing it are arranged in such a way that the plurality of elongated recesses extend substantially in the direction connecting at least one upper point, or zone, to at least one lower point, or zone, of the roofing arrangement, with respect to the ground or with respect to a substantially horizontal plane.

By doing so, the elongated recesses substantially extend in a direction from an upper point to a lower point of the roofing arrangement such as to allow, by means of this tilt, the water channelled in the recesses to flow inside them in order to be removed from the surface of the panel, thus preventing the drip phenomenon.

According to an aspect of the present invention, the at least one panel of the roofing arrangement is tilted with respect to the ground or to a substantially horizontal plane, in order to ensure the proper water draining. The panel according to the present invention allows the water to be effectively removed by means of the elongated recesses even with small tilt angles, even less than five degrees, with respect to the ground or to a horizontal plane.

According to an aspect of the present invention, the length of the panels is such to cover the length of the roofing arrangement, from the highest point (ridge) to the lowest point. In other words, the length of the panel is substantially equal to the distance from the highest point (ridge) to the lowest point of the roofing arrangement.

However, according to possible arrangements, the roofing arrangement comprises two or more panels that are constrained in succession, preferably such that the elongated recesses of two panels arranged in succession are aligned with one another. In other words, the elongated recesses of two panels arranged in succession are arranged so as to coincide, thereby the recesses of the second panel will be the continuation of the elongated recesses of the first panel.

According to an aspect of the present invention, to form the roofing arrangement, two or more panels at least partially overlap. In other words, preferably, the panels overlap in correspondence of at least one of the two sides that is substantially parallel to the extension of the recesses.

In other words, the panels laterally overlap at one or both the panel sides that are substantially parallel to the extension of the recesses.

Advantageously, the elongated recesses are also at the overlapped portions of the panels thereby allowing to aid the accumulated water to flow and preventing it from becoming stagnant at the overlapped portions of two panels. It is therefore possible to prevent mould, or dirt, formation at the overlapped portions of the panels.

According to an aspect of the present invention, two or more panels of the roofing arrangement are arranged on the same plane, preferably at one or both sides the recesses extend from, or generally at one or two sides substantially perpendicular to the extension of the elongated recesses.

In other words, two or more panels are arranged side by side, without being necessary to overlap the end of a panel over the end of a successive panel, as in the roofing arrangements formed for example by tiles arranged at least partially one over the other (as described for example in the patent US2093559).

As aforesaid in relation to the panel, the present roofing arrangement is preferably a roofing arrangement for a structure susceptible to the formation of condensate, i.e. a structure wherein the temperature and humidity conditions make it very likely the formation of condensate, for example structures designed for plant cultivation and/or plant protection, such as greenhouses, nurseries, covered gardens, etc.

Further characteristics and advantages of the present invention will be more evident from the following description, made by way of non limiting example, referring to the accompanying figures, in which:
- figure 1 is a perspective view of a flat panel not being part of the present invention provided with a plurality of recesses;
- figures 2 to 5 show some possible embodiments of the elongated recesses of the panel according to the present invention, wherein figures 2A - 5A show the recesses arranged on a wavy (undulated) panel, figures 2B - 5B show the recesses arranged on a ribbed (corrugated or also known as Greek fretted section) panel and figures 2C - 5C show a sectional enlarged view of the elongated recesses;
- figure 6 shows a perspective view of a roofing arrangement for a structure formed by means of flat panels not being part of the present invention.

### DETAILED DESCRIPTION OF THE PRESENT INVENTION

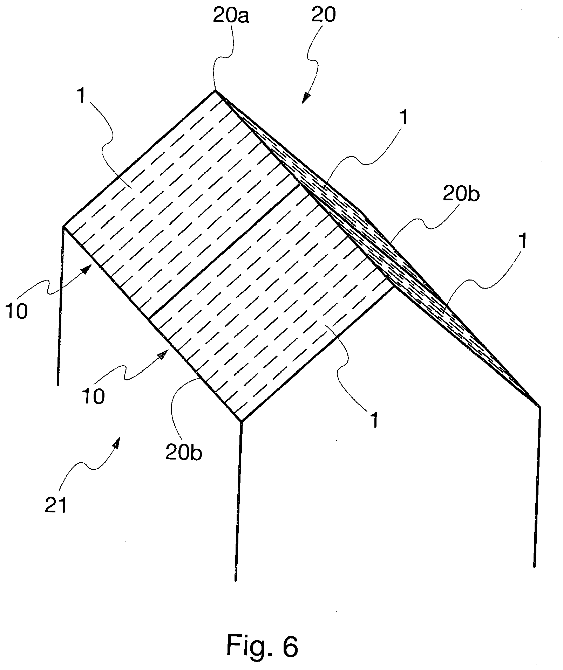

Referring to the attached figures, the present invention relates to a panel 1 for the construction of roofing arrangements 20 (for example schematically illustrated in figure 6) comprising two substantially opposite surfaces 2, 3 defining the panel that are spaced apart by a predetermined thickness T.

Preferably, the panel thickness T is constant along its entire extension and in the shown embodiment is about 2 mm, however, of course, other measures of the thickness of the panel, i.e. the distance between the two opposite surfaces 2, 3, can be selected according to requirements. The panel thickness is between about 3 mm and about 0.8 mm.

The panel 1 is made of a thermoplastic polymeric material, such as for example polycarbonate. However, other materials can be used such as methacrylate, PVC, etc., or other thermoplastic polymeric materials being particularly light as well as cost effective and easy to be made.

Preferably, the panel 1 according to the present invention is formed by means of an extruding process, which advantageously allows to make very long panels. For example, panels about 13 meters long can be made. However, it is always possible to obtain higher lengths of 15 metres, or 18 metres, or even more.

It should also be noted that, below in the present description and in the accompanying drawings, a compact panel 1 has been illustrated, i.e. a panel having a continuity of material between the two opposite surfaces 2, 3.

Furthermore, the panel 1 according to the present invention is preferably transparent, thereby allowing the light radiation to pass through it. It should be noted that, although the panel 1 is transparent to allow the light radiation to pass through it, it can be coloured or treated to become opaque according to installation requirements.

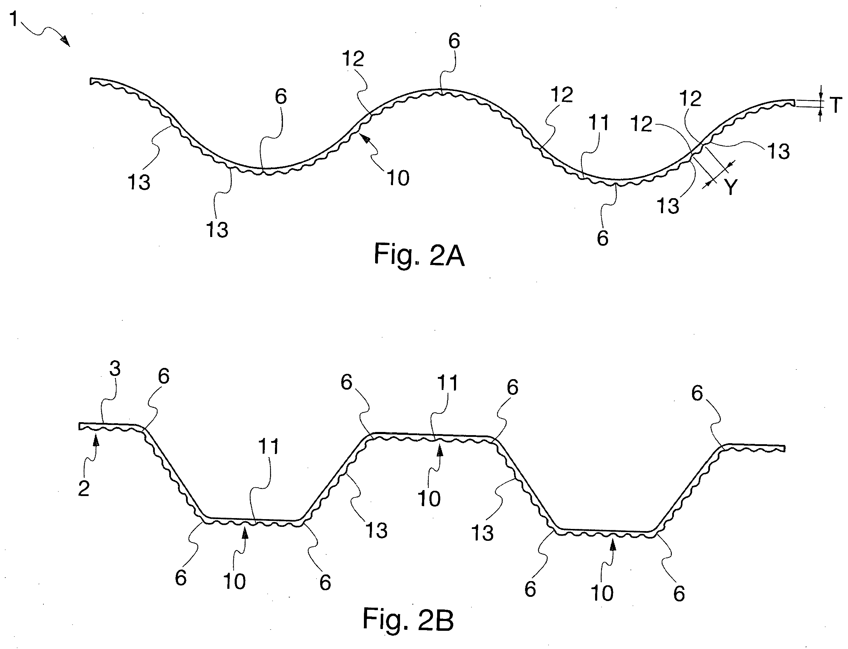

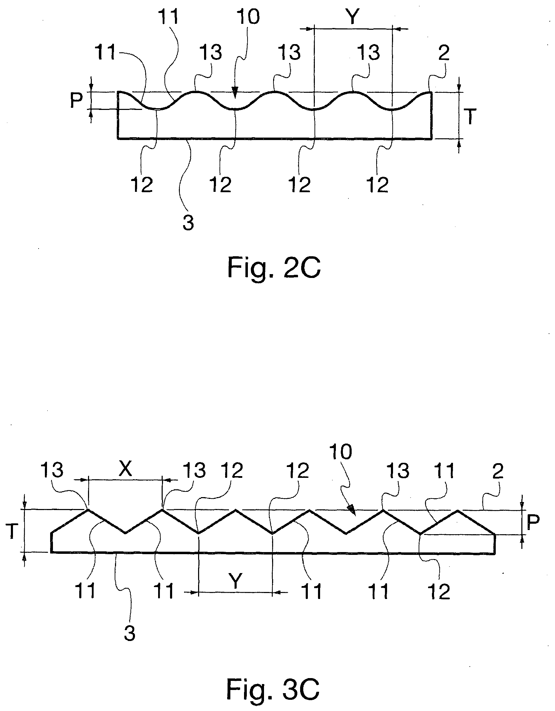

As it will be seen in more detail below, the panel 1 according to the present invention is corrugated, i.e. its surface is bent or curved. In more detail, the two opposite surfaces 2, 3 are bent or curved at one or more lines 6 such as to cause a modification in the overall shape of the panel, as shown in figures 2 - 5.

The panels used for the construction of roofing arrangements are corrugated so as to have a wavy (undulated) or ribbed surface. In the first case, as shown in the embodiment of figures 2A - 5A, the surfaces 2, 3 are curved at some lines 6, such that the panel profile is wave-shaped. It should be noted that Figures 2A - 5A, as will be seen below, show some possible embodiments of the elongated recesses 10 provided on the wavy panel according to the present invention.

As regards the formation of the ribbed shape, the surfaces of the panel 2, 3 are bent at some lines 6, so that substantially trapezoidal shapes alternate in their profile thereby providing the so-called ribbed or corrugated or Greek fretted shape.

Such an embodiment will be also illustrated in figures 2B - 5B which show possible embodiments of the elongated recesses 10 provided on the ribbed panel according to the present invention, as it will be evident.

As afore said, the panel 1 according to the present invention further comprises a plurality of elongated recesses 10 formed on at least one of the two opposite surfaces 2, 3 of the panel.

As already mentioned, the term "recess" means a portion which is on the surface 2 of the panel and lowered with respect to said surface. These lowered portions (or recesses) are formed in the thickness T of the panel itself and do not protrude also at the surface 3 opposite to the surface 2 on which they are arranged. In other words, the elongated recesses 10 do not modify also the surface 3 of the panel opposite with respect to the surface 2 on which the recesses 10 are arranged.

In other words, according to different embodiments, the depth P of recesses 10 can be different according to the installation requirements, but preferably the surface 3 of the panel opposite to the surface 2 on which the panels are arranged is not modified by them.

In the embodiment shown in figures 2-5, the panel thickness T is about 1.8 mm and the recess depth is about 0.8 mm or about 1 mm. It should be noted that, according to an aspect of the present invention, in a panel 1 having a thickness T of 0.8 mm, the recesses 10 can have a depth P of 0.2 mm or 0.3 mm.

According to an aspect of the present invention, the depth P is proportional to the thickness T of the panel.

In general, the recess depth can be between 0.2 mm and 2.5 mm, for example with a thickness T between 0.8 mm and 3 mm.

Hereinafter, referring to figures 2-5, the criteria for measuring the recess depth P will be illustrated in detail.

Moreover, the term elongated, referred to recesses 10, means herein that they extend in the plane such that one of their dimensions prevails on the second one, i.e. they extend such that their length is much greater than their width.

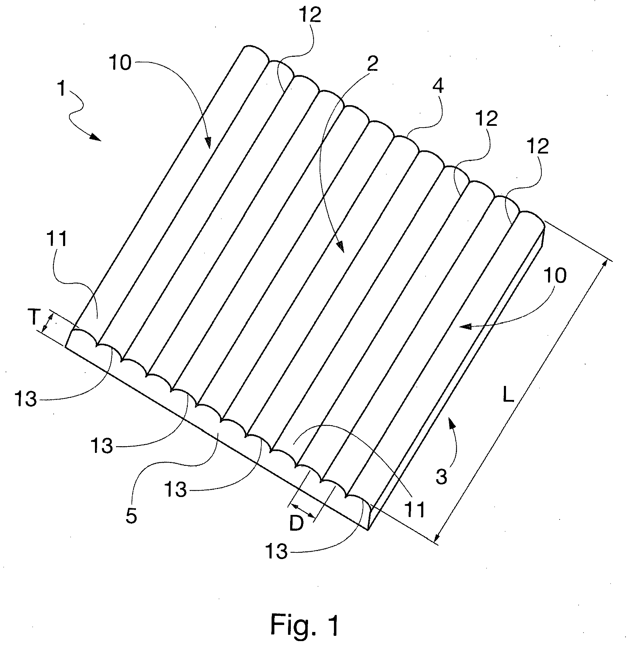

In other words, preferably the recesses 10 have a thin and elongated shape, i.e. their length L is much greater than their width D, as shown in the perspective view of figure 1.

According to a preferred embodiment, the elongated recesses 10 extend over the entire length of the panel, thereby connecting two opposite sides 4, 5 of the same, as shown, for example, in figure 1.

It should be noted that the panel 1 made of thermoplastic polymeric material, preferably by an extruding process, can have a large extension in length. In general, the length of the panel 1 according to the present invention can be set based on the length of the roofing arrangement (for example between the ridge and the lowest point of the roofing arrangement).

The plurality of elongated recesses 10 of the panel cover the entire surface 2 of the panel itself, or cover substantially the entire surface of the panel. Moreover, the elongated recesses 10 are laterally juxtaposed relative to one another and are arranged in succession.

Each elongated recess 10 may extends along a straight line. In this regard it should be noted that, the elongated recesses 10 can extend along lines that are not perfectly straight but tilted or curved, but that have anyway a substantially elongated shape in order to allow the water accumulated on the surface of the panel to flow and thus to drain inside them, as will be better explained below.

Further, according to a preferred aspect of the present invention, the elongated recesses 10 extend parallel to each other.

The elongated recesses 10 provide the panel according to the present invention with an effective anti-drip function. In fact, if condensate forms on the surface 2 of the panel provided with the plurality of recesses, then the latter allow the water drops to be channelled towards the bottom portion 12 of each recess and thus to slide therein so as to be removed from the surface 2 of the panel by exploiting the roofing arrangement tilt. By doing so, the water drops due to the condensation will not stop on its surface 2 but will be channelled in the recesses 10, thereby allowing their draining and thus preventing their accumulation on the surface 2. By doing so, it is possible to prevent the water drops from falling down by gravity causing the undesired drip phenomenon from the panel of the roofing arrangement towards the inside of the structure.

For these reasons, the panel according to the present invention has specific application in roofing arrangements where the condensate accumulated on the inner surface of the panel, i.e. the one facing the inside of the structure, must be prevented from falling by gravity inside the structure itself, thereby causing the undesired drip phenomenon.

In particular, the panel according to the invention can be advantageously used for constructing roofing arrangements for several structures where the drip should be prevented and where the condensate is very likely to form due to temperature and humidity conditions inside the structure. In detail, the panel according to the present invention is particularly used in structures designed for plant cultivation and/or plant protection, such as greenhouses, nurseries, covered gardens, and in general where temperature and humidity conditions facilitate the formation of condensate on the inner surface of the panel, i.e. the one facing the inside of the structure itself.

In particular, in structures designed for plant cultivation and/or plant protection, it would be better to prevent the drip phenomenon caused by the condensate, i.e. to prevent the water drops from falling from the surface of the panel toward the inside of the structure, in fact, this phenomenon could affect the critical watering procedures, which can be even diversified inside the structure, for the different plants present inside it.

Coming back to the panel 1 according to the present invention, and in particular the plurality of elongated recesses 10 provided on it, each of these recesses 10 comprises at least one surface 11 extending between at least one bottom portion 12 and at least one ridge 13 of the recess 10.

In particular, in the sectional view of figures 2 to 5, the surface 11 connecting the bottom portion 12 of the recess 10, i.e. the deepest zone in the recess 10, with the ridge 13, i.e. the upper area of the recess located at the surface 2 of the panel where the recesses are arranged, is depicted by a line.

Advantageously, the surface 11 of the recesses connecting the bottom portion 12 with a ridge 13, causes the water possibly accumulated on the surface of the panel in form of condensate, to slide. By doing so, it is possible to effectively canalize the water to the bottom portion 12 of the recess 10, where it can slide along the recess so as to be removed, de facto, from the surface of the panel.

It should be noted that the depth P of the recess 10 is measured substantially along a vertical axis between a ridge 13 of the recess 10, i.e. at the surface of the panel 2 where the recesses are made, and the bottom portion 12 of the recess 10.

Furthermore, it should be noted that the panel thickness T, i.e. the distance between the two opposite surfaces 2, 3 of the panel, can be measured between the ridge/ridges 13 of the recesses 10 and the surface 3 opposite to the surface 2 where the recesses 10 are arranged. In fact, the recess ridges 13 identify the surface 2 of the panel where the recesses 10 are arranged.

As previously mentioned, the elongated recesses 10 of the panel are laterally juxtaposed relative to one another and are arranged in succession. As a result, according to an aspect of the present invention, the at least one ridge 13 of an elongated recess 10 coincides with at least one ridge 13 of a successive elongated recess 10, as in the embodiment shown in figures. However, it should be noted that, according to further possible embodiments, not being part of the present invention, a spacing can be provided between the recesses 10.

In the embodiment shown in figures, it should be noted that the pitch X is constant, i.e. the distance between two ridges 13 of two successive recesses 10, for example of about 3 mm.

However, the pitch between successive recesses can be varied according to requirements and is such to allow to effectively convey the water formed on the surface of the panel.

Likewise, in the embodiment shown in figures, also the pitch Y between two bottom portions 12 of two successive recesses 10 is constant and is about 3mm. However, as already mentioned, the distance between two successive recesses can be modified according to constructional requirements.

Figures 2 to 5 show some different shapes of the elongated recesses 10 the panel according to the present invention can be provided with. Despite this, the embodiments shown therein should not be considered as restrictive, since different shapes of the elongated recesses 10 of the panel can be used in further possible embodiments not shown in the attached figures, as evident.

Figures 2 to 5, comprising the views A, B and C, show the same embodiment of the elongated recesses 10, respectively in a sectional view of a wavy panel (figures 2A - 5A), in a sectional view of a ribbed panel (figures 2B - 5B) and in an enlarged sectional view showing the recesses on a flat surface (figures 2C - 5C).

In particular, according to some possible embodiments of the present invention, the at least one surface 11 of the recess 10, extending from at least one bottom portion 12 and at least one ridge 13 of the recess 10, comprises at least one flat portion, or at least one concave portion, or at least one convex portion.

Due to these shapes of the surface 11 of the recess, the water in form of condensate on the surface 2 of the panel, slides and is canalized with particular effectiveness to the bottom portion 12 of the recesses 10.

In particular, in the embodiment of the recesses 10 shown in figures 2A, 2B and 2C, in each of them a bottom portion 12 can be seen that is substantially the deepest point of the recess 10, i.e. the farthest point from the surface 2 of the panel (or the closest to the opposite surface 3 of the panel), and at least one ridge 13 can be seen as substantially located sideways of the recess at the surface 2 of the panel 1 on which the recesses 10 are arranged.

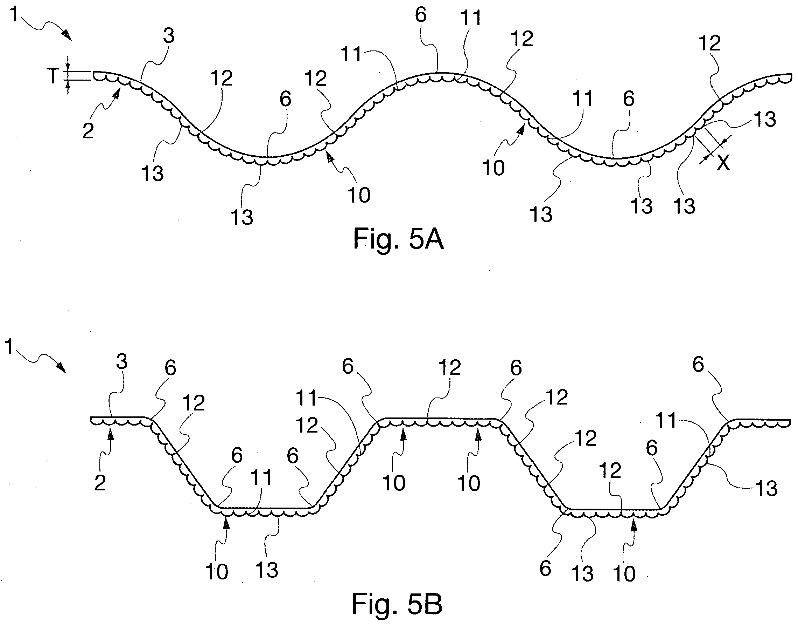

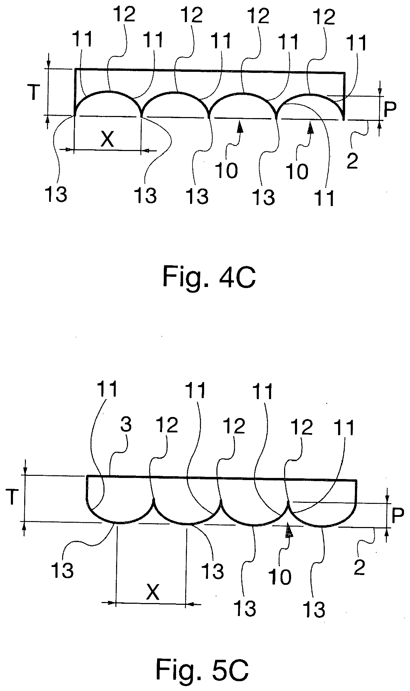

It should be noted that the embodiment of the panel shown in figure 1 shows recesses 10 that correspond to those of figure 5 except for the panel of figure 1 being flat.

In detail, in the embodiment shown in figures 2A, 2B and 2C, the top or upper portion of the ridge 13 is substantially rounded, lies on and identifies the surface 2 of the panel where the recesses 10 are arranged, together with the other ridges 13 of the recesses 10 the panel is provided with.

Furthermore, in this embodiment, the surface 11 connecting the bottom portion 12 of the recess with a ridge 13 is at least partially concave. By doing so, the recesses have a substantially U-shaped section and are sideways provided with ridges 13 which are rounded at their upper part that, as mentioned, corresponds to the surface 2 of the panel where the recesses 10 are arranged.

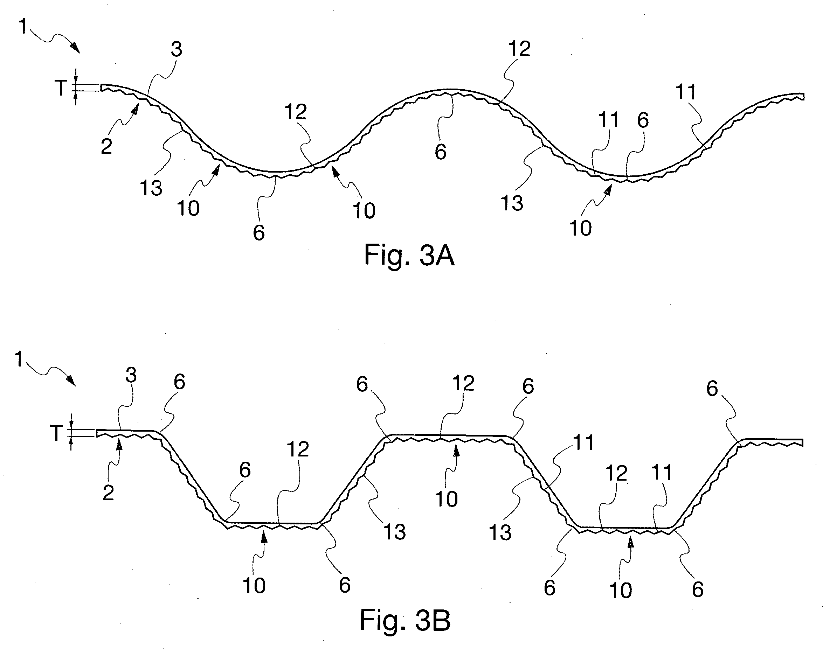

In the embodiment of the elongated recesses 10 shown in figures 3A, 3B and 3C, the surface 11, extending between the bottom portion 12 of the recess 10 and a ridge 13, is at least partially flat, and in particular it is tilted as well, as visible in the sectional views of these figures.

Each recess 10 has a bottom portion 12 substantially coincident with the intersection point of two surfaces 11 which, as mentioned, are flat and tilted and extend toward a respective ridge 13. As a result, the section of the recesses 10 is substantially triangle-shaped. Even in this case, the ridges 13 of the recesses 10 lie on and identify the surface 2 of the panel 1 where the recesses 10 are arranged.

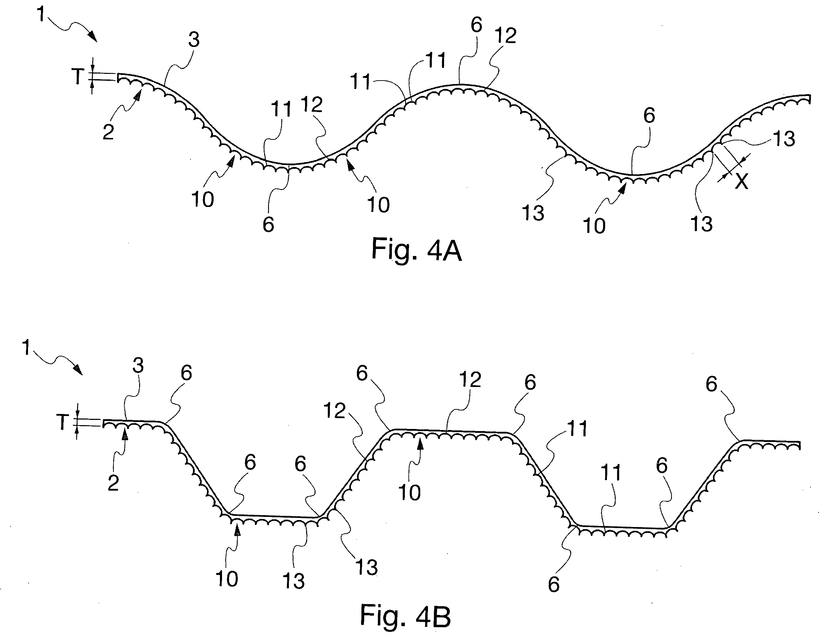

In the embodiment shown in figures 4A, 4B and 4C, the recess sections are substantially U-shaped and, as in the embodiment illustrated in figure 2, the bottom portion 12 is substantially the deepest point of the recess, i.e. the farthest point from the surface 2 of the panel, or the closest to the opposite surface 3 of the panel 1. Furthermore, in this embodiment, the surface 11 connecting the bottom portion 12 of the recess with a ridge 13 is at least partially concave. By doing so, the recesses have a substantially U-shaped section and are laterally provided with ridges 13 which, unlike the embodiment illustrated in Figure 2, are not rounded at their upper part or top. In fact, in the embodiment of figures 4A, 4B and 4C, the ridges 13 of the recesses substantially end in a thin and vertical shape that identifies, even in this case, the surface 2 of the panel where the recesses 10 are arranged.

In the embodiment shown in figures 5A, 5B and 5C, the recesses 10 comprise at least one surface 11 comprising at least one convex portion. In fact a bottom portion 12, substantially arranged at the intersection point of two convex surfaces 11 extending towards respective ridges 13, can be seen in the recesses 10.

In this embodiment, the ridges 13 are provided with a rounded upper portion or top identifying, even in this case, the surface 2 of the panel where the recesses 10 are arranged.

As previously mentioned, the panel 1 according to the present invention is corrugated, and in particular it can be wavy (undulated), as in the embodiment of figures 2A to 5A, or it can be ribbed, as in the embodiment illustrated in figures 2B to 5B.

As mentioned, the panel 1 is formed in a wavy or ribbed shape by bending or curving the two opposite surfaces 2, 3 at one or more lines 6 which can be seen in the sectional views of figures 2 - 5.

It should be noted that, according to a preferred embodiment, the elongated recesses 10 extend substantially parallel with respect to the lines 6 at which the opposite surfaces 2, 3 of the panel are bent or curved.

In other words, in the embodiment shown in figures, the bending or curving lines 6 are parallel to the extending lines of the elongated recesses 10.

Advantageously, the elongated recesses 10 of the panel 1 according to the present invention that allow, as mentioned, the water on the surface of the panel to be collected and slide, thereby preventing the undesired drip phenomenon, can be easily and integrally formed (in one piece) with the panel since they do not require the application of varnishes, or additional films, or surface layers, as it happens for the panels currently available on the market.

Advantageously, the elongated recesses 10 of the panel can be formed on the surface thereof during the extruding process. In fact, the melted plastic material forming the panel 1 is passed through the extruder which can have the shape of the recesses 10 in order to form them by extrusion in the panel production step. By doing so, a plurality of elongated recesses 10 can be directly formed on a surface of the panel without undesirably protracting the productive process.

The present invention also relates to a roofing arrangement 20 for a structure 21 formed by one or more panels 1 of the above described type.

Figure 6 is a schematic perspective view of a structure 21 provided with a roofing arrangement 20, in which used panels have a flat and not corrugated shape as the one of the invention and illustrated in figures 2 - 5.

It should be noted that, even though a roofing arrangement 20 provided with two pitches has been illustrated in figure 6, the use of the panel 1 according to the present invention is not limited to this application.

As shown in figure 6, the roofing arrangement 20 is at least partially tilted or curved with respect to the ground or, in general, with respect to a substantially horizontal plane, and the panel, or panels 1, composing it are arranged such that the plurality of elongated recesses 10 (schematically shown by dotted lines) extend substantially in the direction connecting at least one upper point, or zone, to at least one lower point, or zone, of the roofing arrangement 20 with respect to the ground or with respect to a substantially horizontal plane.

By doing so, the elongated recesses 10 substantially extend in a direction from an upper point to a lower point of the roofing arrangement 20 such as to allow, by means of this tilt, the water channelled in the recesses 10 to flow inside them in order to be removed from the surface 2 of the panel, thereby preventing the drip phenomenon. Obviously, at the end of the panel where the water is canalized, appropriate collecting means can be provided, such as a tank or a gutter possibly connected to pipes draining the water present in the structure 21.

Advantageously, the panel according to the present invention allows the water to flow in the recesses 10, thereby preventing the drip phenomenon, even if the panel is slightly tilted with respect to the ground or to a reference horizontal plane. For example, the panel 1 according to the present invention has proven to be effective in preventing the drip phenomenon even with a few degree tilt, for example less than five degrees, or less than ten degrees, with respect to the ground, or with respect to a reference horizontal plane.

The length of the panels is such as to cover the length of the roofing arrangement, from the highest point (ridge) to the lowest point.

Furthermore, according to an aspect of the invention, the roofing arrangement comprises two or more panels that are constrained in succession, such that the elongated recesses of two panels arranged in succession are aligned with one another.

In other words, the elongated recesses of two panels arranged in succession are arranged so as to coincide, thereby the recesses of the second panel will be the continuation of the elongated recesses of the first panel. Preferably, two or more panels 1 of the roofing arrangement are arranged such that the elongated recesses are aligned with each other to allow the water to flow between two successive panels.

According to an aspect of the invention, in order to form the roofing arrangement, two or more panels at least partially overlap. In other words, preferably, the panels overlap in correspondence of at least one of the two sides that is substantially parallel to the extension of the recesses.

In other words, preferably the panels overlap next to at least one side different from the sides 4 and 5 between which the recesses 10 extend, or which generally are substantially perpendicular to the extension of the recesses 10.

In other words, the panels laterally overlap at one or both the sides of the panel that are substantially parallel to the extension of the recesses.

According to an aspect of the invention, the panels are arranged side by side such as to be on the same plane. Preferably at least one side 4, 5 of the panel, substantially perpendicular to the extension of the recesses, is arranged next to the side 4, 5 of another panel. The panels 1 can be arranged side by side, preferably on the same plane, at the sides 4 and 5 between which the recesses 10 extend, however, it is possible that the panels are on the same plane at the other two sides of the panel, which are substantially parallel to the extension of the recesses 10.

In figure 6, the roofing arrangement 20 for the structure 21 comprises a central ridge 20a from which the panels 1 branch up to the two eaves 20b arranged lower than the ridge 20a and laterally with respect to it.

The elongated recesses 10 of the panels 1 are arranged substantially in the ridge-eave direction (as schematically illustrated in figure 6 by dotted lines) and thus substantially extend in the direction connecting at least one upper point, or zone (ridge 20a), to at least one lower point, or zone, with respect to the ground (eave 20b).

Furthermore, it should be noted that the elongated recesses 10 are arranged on the surface 2 of the panel forming the inner part of the roofing arrangement 20, i.e. on the surface of the panel facing the interior of the structure 21, such that the elongated recesses 10 arranged thereon can effectively channel and remove the water present on the surface 2 in form of condensate.

It should be noted that the panel according to the present invention, irrespective of its shape, can also be bent so as to be able to form curved roofing arrangements.

In fact, the roofing arrangement 20 can also be curved with respect to the ground, i.e. formed by panels having a curvature in a direction connecting at least one upper point, or zone, to at least one lower point, or zone, with respect to the ground. For example, in the embodiment shown in figure 6, the roofing arrangement between the ridge 20a and the eave 20b could be, for example, curved with respect to the ground and formed by one or more panels 1 having a surface curved along the ridge-eave direction, instead of one or more panels having a flat surface, as shown in figure 1.

Even in this case, the curvature of the surface with respect to the ground allows water channelled in the elongated recesses 10 of the panel to flow inside them so as to be effectively removed from the surface of the panel and to prevent unwanted drips inside the structure 21.

The roofing arrangement 20 is preferably a roofing arrangement for a structure 21 susceptible to the formation of condensate, i.e. a structure wherein the temperature and humidity conditions make it very likely the formation of condensate, in particular structures designed for plant cultivation and/or plant protection, such as greenhouses, nurseries, covered gardens, etc.

## Claims

1. Panel (1) for the construction of roofing arrangements (20), comprising two substantially opposite surfaces (2, 3) and made of a thermoplastic polymeric material, preferably polycarbonate, said panel (1) being a compact panel having a continuity of material between the two opposite surfaces (2, 3) and said panel being corrugated with said two opposite surfaces (2, 3) bent or curved at one or more lines (6) to provide an undulated or ribbed surface, **characterized in that** it comprises a plurality of elongated recesses (10) formed on at least one of said two opposite surfaces (2, 3) of said panel and **in that** the at least one surface (2) of the panel (1) comprising the plurality of elongated recesses (10) is at least the inner surface of the roofing arrangement (20), wherein said elongated recesses (10) are formed in the thickness (T) between the two surfaces (2, 3) of the panel, the thickness being between about 3 mm and about 0.8 mm, wherein said elongated recesses (10) cover the entire, or substantially the entire surface (2) of said at least one of said two opposite surfaces (2, 3) of the panel and are laterally juxtaposed relative to one another and are arranged in succession.

2. Panel according to claim 1, wherein at least one elongated recess (10) comprises at least one surface (11) extending from at least one bottom portion (12) to at least one ridge (13) of said recess (10).

3. Panel according to claim 2, wherein the at least one ridge (13) of at least one elongated recess (10) coincides with at least one ridge (13) of a successive elongated recess (10) formed on said surface (2) of the panel.

4. Panel according to claim 2, wherein said at least one surface (11) extending from at least one bottom portion (12) to at least one ridge (13) of said at least one recess (10) comprises at least one flat portion, or at least one concave portion, or at least one convex portion.

5. Panel according to claim 1, wherein said elongated recesses (10) extend substantially parallel with respect to said lines (6) at which said opposite surfaces (2, 3) of the panel are bent or curved.

6. Panel according to any one of the preceding claims, **characterized in that** said plurality of elongated recesses (10) are formed only on one of said two opposite surfaces (2, 3) of the panel, the surface (3) of said panel opposite to the surface (2) which comprises said plurality of elongated recesses (10) being substantially smooth.

7. Panel according to any one of the preceding claims, wherein the depth (P) of said elongated recesses (10) is proportional to the thickness (T) of the panel.

8. Panel according to any one of the preceding claims, wherein the depth (P) of said elongated recesses (10) is between about 0.2 mm and about 2.5 mm.

9. Use of at least one panel (1) according to any one of the preceding claims for the construction of roofing arrangements (20) for structures susceptible to the formation of condensate and preferably for structures designed for plant cultivation and/or plant protection.

10. Roofing arrangement (20) for a structure (21), **characterized in that** it comprises at least one panel (1) according to any one of claims 1 to 8, wherein the surface (2) of said panel (1) comprising said plurality of elongated recesses (10) is the inner surface of said roofing arrangement (20).

11. Roofing arrangement according to claim 10, **characterized in that** it is at least partially tilted or curved with respect to the ground or with respect to a substantially horizontal plane, said at least one panel (1) being arranged in such a way that said plurality of elongated recesses (10) extend substantially in the direction connecting at least one upper point, or zone (20a), to at least one lower point, or zone (20b), of said roofing arrangement with respect to the ground, or with respect to a substantially horizontal plane.

12. Roofing arrangement according to claim 10 or 11, wherein said at least one panel has a length between two opposite sides (4, 5) substantially equal to the distance between the upper point, or zone (20a), and at least one lower point, or zone (20b), of said roofing arrangement (20) with respect to the ground, or with respect to a substantially horizontal plane.

13. Roofing arrangement according to any one of claims 10 to 12, wherein two or more panels (1) are constrained in succession with said elongated recesses (10) of two aligned panels arranged in succession.

14. Roofing arrangement according to any one of claims 10 to 13, wherein two or more panels are arranged to overlap on one another, preferably in correspondence of at least one side substantially parallel to the extension of said elongated recesses (10).

15. Roofing arrangement according to any one of claims 10 to 14, wherein two or more panels (1) of the roofing arrangement are arranged on the same plane.

## Patentansprüche

1. Platte (1) für den Bau von Dachanordnungen (20), umfassend zwei im Wesentlichen gegenüberliegenden Oberflächen (2, 3) und hergestellt aus einem thermoplastischen Polymerwerkstoff, vorzugsweise Polykarbonat,
wobei die Platte (1) eine massive Platte mit einem stetigen Material zwischen den zwei gegenüberliegenden Oberflächen (2, 3) ist und wobei die Platte (1) gewellt ist, mit den beiden gegenüberliegenden Oberflächen (2, 3) gebogen oder gekrümmt an einer oder mehreren Linien (6) um eine gewellte oder gerippte Oberfläche bereitzustellen,
**dadurch gekennzeichnet, dass** sie eine Vielzahl von länglichen Vertiefungen (10) umfasst, gebildet auf wenigstens einer der beiden gegenüberliegenden Oberflächen (2, 3) von der Platte, und dadurch, dass die wenigstens eine Oberfläche (2) der Platte (1), die die Vielzahl der länglichen Vertiefungen (10) umfasst, wenigstens die innere Oberfläche von der Dachanordnung (20) ist, wobei die länglichen Vertiefungen (10) in der Stärke (T) zwischen den beiden Oberflächen (2, 3) der Platte gebildet sind, wobei die Stärke zwischen ungefähr 3 mm und ungefähr 0,8 mm ist,
wobei die länglichen Vertiefungen (10) die gesamte oder im Wesentlichen die gesamte Oberfläche (2) von der wenigstens einen der beiden gegenüberliegenden Oberflächen (2, 3) bedecken und relativ zueinander lateral nebeneinander und aufeinanderfolgend angeordnet sind.

2. Platte nach Anspruch 1, wobei wenigstens eine längliche Vertiefung (10) wenigstens eine Oberfläche (11) umfasst, die sich von wenigstens einem unteren Abschnitt (12) zu wenigstens einem Grat (13) der Vertiefung (10) erstreckt.

3. Platte nach Anspruch 2, wobei der wenigstens eine Grat (13) von wenigstens einer länglichen Vertiefung (10) sich mit wenigstens einem Grat (10) von einer nachfolgenden länglichen Vertiefung (10) gebildet auf der Oberfläche (2) der Platte deckt.

4. Platte nach Anspruch 2, wobei die wenigstens eine sich von wenigstens einem unteren Abschnitt (12) zu wenigstens einem Grat (13) erstreckende Oberfläche (11) von der wenigstens einen Vertiefung (10) wenigstens einen flachen Bereich oder wenigstens einen konkaven Bereich oder wenigstens einen konvexen Bereich umfasst.

5. Platte nach Anspruch 1, wobei sich die länglichen Vertiefungen (10) im Wesentlichen parallel zu den Linien (6) erstrecken, an welchen die gegenüberliegenden Oberflächen (2, 3) von der Platte gebogen oder gekrümmt sind.

6. Platte nach einem der vorherigen Ansprüche, **dadurch gekennzeichnet, dass** die Vielzahl von länglichen Vertiefungen (10) nur auf einer von den beiden gegenüberliegenden Oberflächen (2, 3) von der Platte geformt sind, wobei die Oberfläche (3) gegenüberliegend zu der Oberfläche (2) umfassend die Vielzahl von länglichen Vertiefungen (10) im Wesentlichen glatt ist.

7. Platte nach einem der vorherigen Ansprüche, wobei die Tiefe (P) von den länglichen Vertiefungen (10) proportional zu der Stärke (T) der Platte ist.

8. Platte nach einem der vorherigen Ansprüche, wobei die Tiefe (P) der länglichen Vertiefungen (10) zwischen ungefähr 0,2 mm und ungefähr 2,5 mm ist.

9. Verwendung von wenigstens einer Platte (1) nach einem der vorherigen Ansprüche für den Bau einer Dachanordnung (20) für Gebilde anfällig für die Bildung von Kondensat und vorzugsweise für Gebilde ausgebildet für Pflanzenbau und/oder Pflanzenschutz.

10. Dachanordnung (20) für ein Gebilde (21), **dadurch gekennzeichnet, dass** sie wenigstens eine Platte (1) nach einem der Ansprüche 1 bis 8 umfasst, wobei die Oberfläche (2) der Platte (1) umfassend die Vielzahl von länglichen Vertiefungen (10) die innere Oberfläche von der Dachanordnung (20) ist.

11. Dachanordnung nach Anspruch 10, **dadurch gekennzeichnet, dass** sie wenigstens teilweise geneigt oder gekrümmt bezüglich zu dem Grund ist oder bezüglich einer im Wesentlichen horizontalen Ebene, wobei die wenigstens eine Platte (1) derart angeordnet ist, dass sich die Vielzahl von länglichen Vertiefungen (10) im Wesentlichen erstrecken in Richtung einer Verbindung von wenigstens einen oberen Punkt oder Zone (20a) mit wenigstens einem unteren Punkt oder Zone (20b) von der Dachanordnung bezüglich zu dem Grund oder bezüglich einer im Wesentlichen horizontalen Ebene.

12. Dachanordnung nach Anspruch 10 oder Anspruch 11, wobei die wenigstens eine Platte eine Länge zwischen zwei gegenüberliegenden Seiten (4, 5) aufweist, die im Wesentlichen gleich ist zu dem Abstand zwischen dem oberen Punkt oder Zone (20a) und dem unteren Punkt oder Zone (20b) der Dachanordnung (20) bezüglich zu dem Grund oder bezüglich einer im Wesentlichen horizontalen Ebene.

13. Dachanordnung nach einem der Ansprüche 10 bis 12, wobei zwei oder mehr Platten (1) hintereinander mit den länglichen Vertiefungen (10) von zwei hintereinander ausgerichteten Platten fixiert sind.

14. Dachanordnung nach einem der Ansprüche 10 bis 13, wobei zwei oder mehr Platten angeordnet sind um einander zu überlappen, vorzugsweise korrespondierend von wenigstens einer Flanke im Wesentlichen parallel zu der Erstreckung von den länglichen Vertiefungen (10).

15. Dachanordnung nach einem der Ansprüche 1 bis 15, wobei zwei oder mehr Platten (1) der Dachanordnung auf derselben Ebene angeordnet sind.

## Revendications

1. Panneau (1) pour la construction d'agencements de toiture (20), comprenant deux surfaces sensiblement opposées (2, 3) et constitué d'un matériau polymère thermoplastique, de préférence du polycarbonate,
ledit panneau (1) étant un panneau compact ayant une continuité de matériau entre les deux surfaces opposées (2, 3) et ledit panneau étant ondulé avec lesdites deux surfaces opposées (2, 3) pliées ou courbées au niveau d'une ou plusieurs lignes (6) pour fournir une surface ondulée ou nervurée,
**caractérisé en ce qu'**il comprend une pluralité de renfoncements allongés (10) formés sur au moins une desdites deux surfaces opposées (2, 3) dudit panneau et **en ce que** l'au moins une surface (2) du panneau (1) comprenant la pluralité de renfoncements allongés (10) est au moins la surface interne de l'agencement de toiture (20), dans lequel lesdits renfoncements allongés (10) sont formés dans l'épaisseur (T) entre les deux surfaces (2, 3) du panneau, l'épaisseur étant comprise entre environ 3 mm et environ 0,8 mm,
dans lequel lesdits renfoncements allongés (10) couvrent la totalité, ou sensiblement la totalité de la surface (2) de ladite au moins une desdites deux surfaces opposées (2, 3) du panneau et sont juxtaposés latéralement les uns par rapport aux autres et sont agencés de manière successive.

2. Panneau selon la revendication 1, dans lequel au moins un renfoncement allongé (10) comprend au moins une surface (11) s'étendant depuis au moins une partie inférieure (12) vers au moins une arête (13) dudit renfoncement (10).

3. Panneau selon la revendication 2, dans lequel l'au moins une arête (13) d'au moins un renfoncement allongé (10) coïncide avec au moins une arête (13) d'un renfoncement allongé (10) successif formé sur ladite surface (2) du panneau.

4. Panneau selon la revendication 2, dans lequel ladite au moins une surface (11) s'étendant depuis au moins une partie inférieure (12) vers au moins une arête (13) dudit au moins un renfoncement (10) comprend au moins une partie plate, ou au moins une partie concave, ou au moins une partie convexe.

5. Panneau selon la revendication 1, dans lequel lesdits renfoncements allongés (10) s'étendent sensiblement de manière parallèle auxdites lignes (6) au niveau desquelles lesdites surfaces opposées (2, 3) du panneau sont pliées ou courbées.

6. Panneau selon l'une quelconque des revendications précédentes, **caractérisé en ce que** ladite pluralité de renfoncements allongés (10) sont formés uniquement sur l'une desdites deux surfaces opposées (2, 3) du panneau, la surface (3) dudit panneau opposée à la surface (2) qui comprend ladite pluralité de renfoncements allongés (10) étant sensiblement lisse.

7. Panneau selon l'une quelconque des revendications précédentes, dans lequel la profondeur (P) desdits renfoncements allongés (10) est proportionnelle à l'épaisseur (T) du panneau.

8. Panneau selon l'une quelconque des revendications précédentes, dans lequel la profondeur (P) desdits renfoncements allongés (10) est comprise entre environ 0,2 mm et environ 2,5 mm.

9. Utilisation d'au moins un panneau (1) selon l'une quelconque des revendications précédentes pour la construction d'agencements de toiture (20) pour des structures sensibles à la formation de condensation et de préférence pour des structures conçues pour la culture de plantes et/ou la protection de plantes.

10. Agencement de toiture (20) pour une structure (21), **caractérisé en ce qu'**il comprend au moins un panneau selon l'une quelconque des revendications 1 à 8, dans lequel la surface (2) dudit panneau (1) comprenant ladite pluralité de renfoncements allongés (10) est la surface interne dudit agencement de toiture (20).

11. Agencement de toiture selon la revendication 10, **caractérisé en ce qu'**il est au moins partiellement incliné ou courbé par rapport au sol ou par rapport à un plan sensiblement horizontal, ledit au moins un panneau (1) étant agencé de telle manière que ladite pluralité de renfoncements allongés (10) s'étendent sensiblement dans la direction reliant au moins un point supérieur, ou une zone (20a), à au moins un point inférieur, ou une zone (20b), dudit agencement de toiture par rapport au sol, ou par rapport à un plan sensiblement horizontal.

12. Agencement de toiture selon la revendication 10 ou 11, dans lequel ledit au moins un panneau a une longueur entre deux côtés opposés (4, 5) sensiblement égale à la distance entre le point supérieur, ou une zone (20a), et au moins un point inférieur, ou une zone (20b), dudit agencement de toiture (20) par rapport au sol, ou par rapport à un plan sensiblement horizontal.

13. Agencement de toiture selon l'une quelconque des revendications 10 à 12, dans lequel deux panneaux (1) ou plus sont contraints de manière successive avec lesdits renfoncements allongés (10) de deux panneaux alignés agencés de manière successive.

14. Agencement de toiture selon l'une quelconque des revendications 10 à 13, dans lequel deux panneaux ou plus sont agencés pour se chevaucher l'un l'autre, de préférence de manière correspondante à au moins un côté sensiblement parallèle à l'extension desdits renfoncements allongés (10).

15. Agencement de toiture selon l'une quelconque des revendications 10 à 14, dans lequel deux panneaux (1) ou plus de l'agencement de toiture sont agencés sur le même plan.
